# EUROPÄISCHE PATENTSCHRIFT

(11) **EP 1 414 833 B1**
(45) Veröffentlichungstag und Bekanntmachung des Hinweises auf die Patenterteilung: **16.06.2010**
(21) Anmeldenummer: 02791461.3
(22) Anmeldetag: 18.07.2002
(51) Int. Cl.: C07F 15/00

(54) **NEUE ÜBERGANGSMETALL-KOMPLEXE UND DEREN EINSATZ IN ÜBERGANGSMETALL-KATALYSIERTEN REAKTIONEN**
NOVEL TRANSITION-METAL COMPLEXES AND USE THEREOF IN TRANSITION-METAL CATALYSED REACTIONS
NOUVEAUX COMPLEXES DE METAL DE TRANSITION ET LEUR UTILISATION DANS DES REACTIONS DE CATALYSATION PAR METAL DE TRANSITION

(30) Priorität: 31.07.2001 DE 10137051
(43) Veröffentlichungstag der Anmeldung: 06.05.2004
(73) Patentinhaber: Saltigo GmbH, 40764 Langenfeld (DE)
(72) Erfinder: BLECHERT, Siegfried, 13503 Berlin (DE); WAKAMATSU, Hideaki, Izumi-ku,Sendai 981-8003 (JP)
(74) Vertreter: Wichmann, Birgid
(86) Internationale Anmeldenummer: PCT/EP2002/008009
(87) Internationale Veröffentlichungsnummer: WO 2003/011875

(56) Entgegenhaltungen:
- WO-A-99/26949
- WO-A-02/076613
- WO-A2-02/14376
- GARBER ET AL.: J. A. CHEM. SOC., Bd. 122, Nr. 34, 2000, Seiten 8168-8179, XP002220693 in der Anmeldung erwähnt
- GESSLER ET AL.: TETRAHEDRON LETTERS, Bd. 41, 2000, Seiten 9973-9976, XP002220694 in der Anmeldung erwähnt
- COALTER ET AL.: CHEM. COMMUN., 2001, Seiten 1158-1159, XP002220695
- BATES ET AL.: J. ORG. CHEM., Bd. 55, Nr. 4, 1990, Seiten 1328-1334, XP002220696
- YAMASHITA ET AL.: J. ORG. CHEM., Bd. 54, Nr. 15, 1989, Seiten 3625-3634, XP002220697
- YAMAGUCHI ET AL.: J. ORG. CHEM., Bd. 63, Nr. 21, 1998, Seiten 7298-7305, XP002220698
- PHILIPPO ET AL.: EUR. J. MED. CHEM., Bd. 32, - 1997 Seiten 881-888, XP002220699
- SEIDERS ET AL.: ORGANIC LETTERS, Bd. 3, Nr. 20, 2001, Seiten 3225-3228, XP002220700

## Beschreibung

Die Erfindung betrifft neue Übergangsmetallkomplexe der Formel (I) und (II), Verfahren zur Herstellung dieser Übergangsmetallkomplexe, Zwischenprodukte zur Herstellung, sowie die Verwendung der Übergangsmetallkomplexe als Katalysatoren in organischen Reaktionen, besonders in Metathesereaktionen.

Die Olefin-Metathese stellt eine wichtige Synthesemethode zur Knüpfung von C-C-Bindungen dar, da mittels dieser Reaktion nebenproduktfrei Olefine synthetisiert werden können. Dieser Vorteil wird sowohl auf dem Gebiet der präparativen organischen Chemie (Ringschluss-Metathese (RCM), Ethenolyse, Metathese acyclischer Olefine, Kreuzmetathese (CM)) als auch auf dem Gebiet der Polymerchemie (Ringöffnende Metathese-Polymerisationen (ROMP), Alkinpolymerisation, acyclische Dien-Metathese-Polymerisation (ADMET)) genutzt.

Für die Olefin-Metathese stehen eine Vielzahl an Katalysatorsystemen zur Verfügung. So werden in WO 99/51344 A1, WO 00/15339 A1 und WO 00/71554 A2 Übergangsmetallkomplexe beschrieben, welche vorzugsweise Liganden aus der Reihe Imidazol-2-yliden, Imidazolin-2-yliden und Phosphan tragen. Die genannten Übergangsmetallkomplexe werden als Katalysatoren in der Olefin-Metathese eingesetzt. Nachteilig bei den in den oben genannten Literaturstellen beschriebenen Katalysatoren ist ihre geringe Stabilität, die sich in sehr kurzen Katalysatorstandzeiten äußert, welche insbesondere für industrielle Anwendungen von großem Nachteil sind. Nach hohen Anfangsaktivitäten sinkt die Katalysatoraktivität rapide ab. Die Katalysatoraktivität dieser Katalysatoren ist zudem stark substratabhängig.

In der WO 02/14376 werden recyclebare Ruthenium enthaltende Katalysatoren beschrieben, die einen dendrimeren Komplex enthalten. Eingesetzt werden diese Katalysatoren für Ringschluss- und Ringöffnungsreaktionen.

In Gessler et al., Tetrahedron Lett. 41, 2000, 9973-9976 und in Garber et al., J. Am. Chem. Soc. 122, 2000, 8168-8179 sind Rutheniumkomplexe beschrieben, welche neben einem Dihydroimidazol-2-yliden-Liganden einen Isopropoxybenzyliden-Liganden aufweisen. Die genannten Rutheniumkomplexe werden als Katalysatoren in Metathesereaktionen eingesetzt, sie lassen sich aus der Reaktionsmischung abtrennen und sind in einer weiteren Metathesereaktion erneut einsetzbar. Nachteilig an diesen wiederverwendbaren Katalysatorsystemen sind die im Vergleich zu den bis dahin bekannten Systemen nur mäßigen Aktivitäten.

Daher bestand Bedarf an neuen Katalysatorsystemen für die Olefin-Metathese, welche stabil und luftstabil sind und zudem hohe Aktivitäten zeigen.

Überraschenderweise wurde nun Verbindungen der Formeln (I) und (II) gefunden, 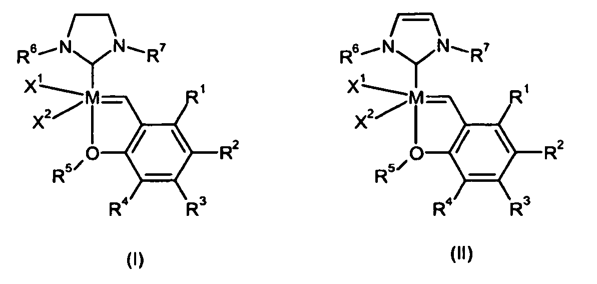 worin
- M: für Ruthenium oder Osmium steht.
- X¹ und X²: gleich oder verschieden sind und für einen anionischen Liganden aus der Reihe Halogenide, Pseudohalogenide, Hydroxide, Alkoxide, Carboxylate, Sulfonate stehen, wobei unter den Pseudohalogeniden Cyanid, Rhodanid, Cyanat, Isocyanat, Thiocyanat und Isothiocyanat verstanden wird,
- R¹, R², R³ und R⁴: gleich oder verschieden sind und für Wasserstoff stehen, mit der Maßgabe, dass mindestens ein Rest R¹ bis R⁴ von Wasserstoff verschieden ist oder für cyclische, geradkettige oder verzweigte Alkylreste mit 1 bis 20 Kohlenstoffatomen oder für Arylreste mit 6 bis 20 Kohlenstoffatomen stehen, wobei in den genannten Alkyl- oder Arylresten gegebenenfalls mindestens ein Wasserstoffatom durch eine Alkylgruppe oder eine funktionelle Gruppe ersetzt ist oder R¹ und/oder R⁴ für Halogen, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
- R¹, R² und R³: für Wasserstoff stehen und R⁴ für einen cyclischen, geradkettigen oder verzweigten Alkylrest mit 1 bis 20 Kohlenstoffatomen oder einen Arylrest mit 6 bis 20 Kohlenstoffatomen steht, wobei in den genannten Resten gegebenenfalls mindestens ein Wasserstoffatom durch eine Alkylgruppe oder eine funktionelle Gruppe ersetzt ist oder für Halogen, C₁-C₄-Alkoxy, C₆-C₁₀- Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
- R¹ und R⁴: gleich oder verschieden sind und für Wasserstoff oder einen Arylrest mit 6 bis 20 Kohlenstoffatomen, wobei im Arylrest gegebenenfalls mindestens ein Wasserstoffatom durch eine Alkylgruppe oder eine funktionelle Gruppe ersetzt ist oder für Halogen, C₁-C₄-Alkoxy, C₆-C₁₀-Aryloxy, Cyano, C₁-C₄- Alkoxycarbonyl, C₆-C₁₀-Aryloxycarbonyl oder für aliphatisches oder aromatisches C₁-C₁₀-Acyloxy stehen und R² und R³ Teil eines cylischen aromatischen Systems mit 4 bis 14 Kohlenstoffatomen sind, wobei die Kohlenstoffatome in Formel (I) und (II) nicht mit eingerechnet werden und wobei gegebenenfalls mindestens ein Wasserstoffatom durch eine Alkylgruppe oder eine funktionelle Gruppe ersetzt ist,
- R⁵: für einen geradkettigen oder verzweigten Alkylrest mit 1 bis 20 Kohlenstoffatomen steht, und
- R⁶ und R⁷: für gleiche Arylreste mit 6 bis 10 Kohlenstoffatomen stehen, wobei mindestens ein Wasserstoffatom durch eine Alkylgruppe aus der Reihe Ethyl, n-Propyl, iso-Propyl, n-Butyl, iso-Butyl, sec.-Butyl und tert.-Butyl ersetzt ist.
- M: steht besonders bevorzugt für Ruthenium.
- X¹ und X²: sind besonders bevorzugt gleich und stehen für einen anionischen Liganden aus der Reihe Halogenide und Pseudohalogenide, wobei unter den Pseudohalogeniden Cyanid, Rhodanid, Cyanat und Isocyanat verstanden wird.
- R¹, R², R³ und R⁴: sind gleich oder verschieden und stehen besonders bevorzugt für Wasserstoff, mit der Maßgabe, dass mindestens ein Rest R¹ bis R⁴ von Wasserstoff verschieden ist oder für cyclische, geradkettige oder verzweigte Alkylreste mit 1 bis 10 Kohlenstoffatomen oder für Arylreste mit 6 bis 14 Kohlenstoffatomen, wobei in den genannten Alkyl- oder Arylresten gegebe- nenfalls mindestens ein Wasserstoffatom durch eine Alkylgruppe oder eine funktionelle Gruppe ersetzt ist oder R¹ und/oder R⁴ steht besonders bevorzugt für Halogen, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀- Acyloxy.
- R¹, R² und R³: stehen besonders bevorzugt für Wasserstoff und R⁴ steht besonders bevorzugt für einen Arylrest mit 6 bis 14 Kohlenstoffatomen, wobei gegebe- nenfalls mindestens ein Wasserstoffatom im Arylrest durch eine Alkylgruppe oder eine funktionelle Gruppe ersetzt ist oder für Halogen, C₁-C₄-Alkoxy, C₆- C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy.
- R¹: steht besonders bevorzugt für Wasserstoff oder für Halogen, C₁-C₄-Alkoxy, C₆- C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy und R⁴ steht besonders bevorzugt für Wasserstoff oder einen Arylrest mit 6 bis 14 Kohlenstoffatomen, wobei gegebenenfalls mindestens ein Wasserstoffatom im Arylrest durch eine Alkylgruppe oder eine funktionelle Gruppe ersetzt ist, vorzugsweise durch C₁- C₄-Alkyl oder C₁-C₄-Alkoxy oder für Halogen, C₁-C₄-Alkoxy, C₆-C₁₀- Aryloxy, Cyano, C₁-C₄-Alkoxycarbonyl, C₆-C₁₀-Aryloxycarbonyl oder für aliphatisches oder aromatisches C₁-C₁₀-Acyloxy und R² und R³ sind Teil eines cylischen aromatischen Systems mit 4 bis 8 Kohlenstoffatomen, wobei die Kohlenstoffatome in Formel (I) und (II) nicht mit eingerechnet werden und wobei gegebenenfalls mindestens ein Wasserstoffatom durch eine Alkylgruppe oder eine funktionelle Gruppe ersetzt ist.
- R⁵: steht besonders bevorzugt für einen verzweigten Alkylrest mit 3 bis 8 Kohlenstoffatomen.
- X¹ und X²: sind ganz besonders bevorzugt gleich und stehen für ein Halogenid, vorzugsweise für Chlorid.
- R² und R³: sind ganz besonders bevorzugt gleich und stehen für Wasserstoff und R¹ steht für Wasserstoff oder für einen Rest aus der Reihe Cl, Br, Methoxy, Ethoxy, Isopropoxy, tert.-Butoxy, Phenoxy, Cyano, Methoxycarbonyl, Ethoxy- carbonyl, tert.-Butoxycarbonyl, Acetoxy, Propionyloxy und Pivaloyloxy und R⁴ steht für Phenyl oder Naphthyl, wobei gegebenenfalls mindestens ein Wasserstoff durch eine Alkylgruppe oder eine funktionelle Gruppe ersetzt ist, vorzugsweise durch C₁-C₄-Alkyl oder C₁-C₄-Alkoxy oder für einen Rest aus der Reihe Cl, Br, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy.
- R¹, R² und R³: stehen ganz besonders bevorzugt für Wasserstoff und R⁴ steht ganz besonders bevorzugt für einen Phenyl- oder Naphthylrest, wobei gegebe- nenfalls mindestens ein Wasserstoffatom durch eine Alkylgruppe oder eine funktionelle Gruppe ersetzt ist, vorzugsweise durch C₁-C₄-Alkyl oder C₁-C₄- Alkoxy oder für einen Rest aus der Reihe Cl, Br, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy.
- R¹: steht ganz besonders bevorzugt für Wasserstoff oder für einen Rest aus der Reihe Cl, Br, Methoxy, Ethoxy, Isopropoxy, tert.-Butoxy, Phenoxy, Cyano, Methoxy- carbonyl, Ethoxycarbonyl, tert.-Butoxycarbonyl, Acetoxy, Propionyloxy und Pivaloyloxy und R⁴ steht ganz besonders bevorzugt für Wasserstoff oder Phenyl oder Naphthyl, wobei gegebenenfalls mindestens ein Wasserstoff durch eine Alkylgruppe oder eine funktionelle Gruppe ersetzt ist, vorzugsweise durch C₁-C₄-Alkyl oder C₁-C₄-Alkoxy oder für einen Rest aus der Reihe Cl, Br, Methoxy, Ethoxy, Isopropoxy, tert.-Butoxy, Phenoxy, Cyano, Methoxy- carbonyl, Ethoxycarbonyl, tert.-Butoxycarbonyl, Acetoxy, Propionyloxy und Pivaloyloxy und R² und R³ sind ganz besonders bevorzugt Teil eines cylischen aromatischen Systems mit 4 bis 8 Kohlenstoffatomen, wobei die Kohlen- stoffatome in Formel (I) und (II) nicht mit eingerechnet werden und wobei gegebenenfalls mindestens ein Wasserstoffatom durch eine Alkylgruppe oder eine funktionelle Gruppe ersetzt ist, vorzugsweise durch C₁-C₄-Alkyl oder C₁- C₄-Alkoxy.
- R⁵: steht ganz besonders bevorzugt für einen verzweigten Alkylrest aus der Reihe iso-Propyl, iso-Butyl, sec.-Butyl, tert.-Butyl, verzweigtes Pentyl, verzweigtes Hexyl.

Ganz besonders bevorzugt sind weiterhin die Verbindungen der Formel (III) bis (V), 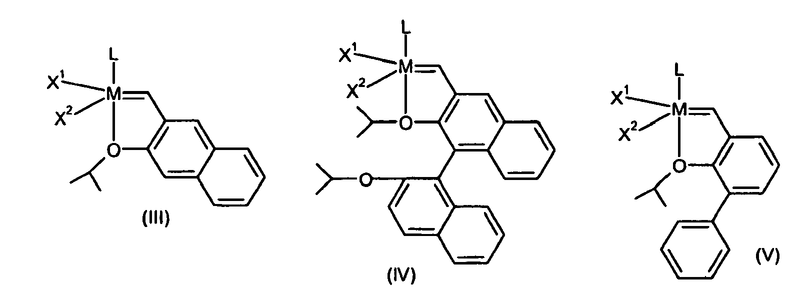 worin
L für 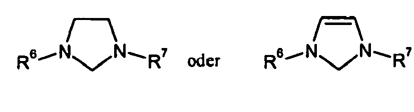 steht
R⁶ und R⁷ die oben angegebene Bedeutung haben,
X¹ und X² für Chlorid stehen und
M für Ruthenium steht.

Die oben aufgeführten allgemeinen oder in Vorzugsbereichen aufgeführten Restedefinitionen bzw. Erläuterungen können untereinander, also auch zwischen den jeweiligen Bereichen und Vorzugsbereichen beliebig kombiniert werden. Sie gelten für die Endprodukte sowie für die Vor- und Zwischenprodukte entsprechend.

Die erfindungsgemäßen Verbindungen der Formel (I) und (II) zeigen neben Luftstabilität und Toleranz gegenüber funktionellen Gruppen deutlich höhere Aktivitäten in Metathese-Reaktionen im Vergleich zu den bisher bekannten Systemen, wie beispielsweise den in Tetrahedron Lett. 41, 2000, 9973-9976 und in J. Am. Chem. Soc. 122, 2000, 8168-8179 beschriebenen Systemen, was in der vorliegenden Anmeldung an Hand der Beispiele belegt wird. Die erfindungsgemäßen Verbindungen der Formel (I) und (II) eignen sich gleichermaßen für Ringschluss-Metathesen, Ringöffnungsmetathesen, Kreuz-Metathesen und ringöffnende Metathese-Polymerisiationen.

Die erfindungsgemäßen Verbindungen der Formel (I) und (II) werden vorzugsweise durch Austauschreaktion des Phosphanliganden PZ₃ in Verbindungen der Formel (VI) durch Liganden der Formel (VII) hergestellt 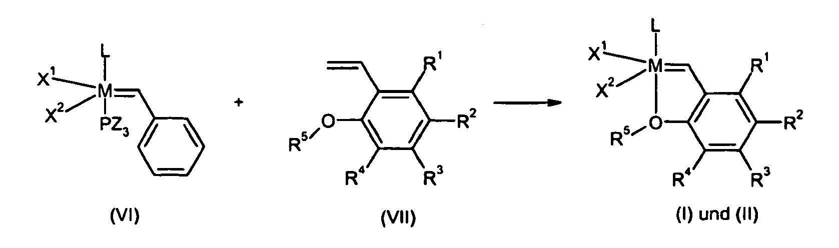 worin
L für 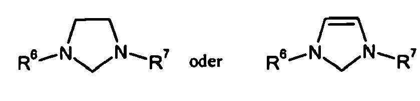 steht und R⁶ und R⁷ eine der oben genannten Bedeutungen haben und
M, R¹-R⁵, X¹ und X² eine der oben genannten Bedeutung haben und
PZ₃ für einen Phosphanliganden, vorzugsweise für Tricyclohexylphosphan steht.

Die Herstellung der erfindungsgemäßen Verbindungen der Formel (I) und (II) aus Verbindungen der Formel (VI) erfolgt vorzugsweise in einem Lösungsmittel, besonders bevorzugt in Toluol, Benzol, Tetrahydrofuran oder Dichlormethan, ganz besonders bevorzugt in Dichlormethan. Die Umsetzung findet vorzugsweise in Gegenwart von Verbindungen statt, die in der Lage sind, Phosphane abzufangen, besonders bevorzugt in Gegenwart von CuCl₂ und CuCl, ganz besonders bevorzugt in Gegenwart von CuCl. Dabei wird vorzugsweise in Gegenwart von äquimolaren Mengen bzw. eines Überschusses an Phosphanfänger, bezogen auf Verbindungen der Formel (VI), gearbeitet. Wird als Phosphanfänger CuCl eingesetzt, so werden besonders bevorzugt 1 bis 1,5 Äquivalente eingesetzt. Es werden vorzugsweise 0,9 bis 3 Äquivalente der Verbindungen der Formel (VII), bezogen auf Verbindungen der Formel (VI) eingesetzt, besonders bevorzugt 1 bis 2 Äquivalente. Die Umsetzung erfolgt vorzugsweise bei Temperaturen von 20 bis 80°C, besonders bevorzugt bei Temperaturen von 30 bis 50°C. Die Umsetzung wird vorzugsweise unter Inertgas wie beispielsweise Stickstoff oder Argon durchgeführt. Die Aufarbeitung erfolgt bevorzugt chromatographisch, besonders bevorzugt säulenchromatographisch an Silicagel.

Weiterhin erfindungsgemäß sind Verbindungen der Formel (VII), die als Zwischenprodukte zur Herstellung der erfindungsgemäßen Verbindungen der Formeln (I) und (II) eingesetzt werden können, wobei die Reste R¹-R⁵ die oben genannten Bedeutungen haben.

Die Herstellung der erfindungsgemäßen Verbindungen (VII) erfolgt vorzugsweise durch Umsetzung von Verbindungen der Formel (XI) in einer Wittig-Reaktion, wie beispielsweise in Maryanoff et al., Chem. Rev. 89, 1989, 863 -927 beschrieben. Um zu den Verbindungen der Formel (XI) zu gelangen, sind mehrere Wege denkbar und in der Literatur genannt. Vorzugsweise wird von Phenolen der Formel (VIII) ausgegangen, welche mit Alkylierungsreagenzien der Formel (IX), worin R⁵ die oben genannten Bedeutungen hat und Y für eine Abgangsgruppe steht, vorzugsweise für einen Rest aus der Reihe Halogen, p-Toluolsulfonyl und Trifluormethansulfonyl, zu Verbindungen der Formel (X) umgesetzt werden (s. Schema). Diese können anschließend nach literaturbekannten Methoden, wie beispielsweise in J. Chem. Soc., Perkin Trans. 2, 1999, 1211-1218 beschrieben, zu den entsprechenden Verbindungen der Formel (XI) umgesetzt werden.

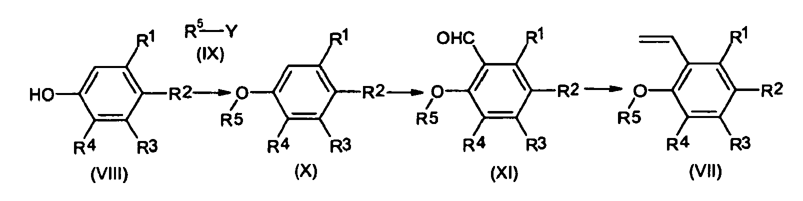

Eine ebenfalls bevorzugte Variante, um zu den Verbindungen der Formel (XI) zu gelangen ist die Umsetzung von Phenolen der Formel (VIII) zu den entsprechenden o-Aldehyden und die Alkylierung dieser Verbindungen zu Verbindungen der Formel (XI).

Die erfindungsgemäßen Verbindungen der Formel (VII) können als Liganden zur Herstellung von Übergangsmetallkomplexen verwendet werden, bevorzugt zur Herstellung von Übergangsmetallkomplexen der Formel (I) und (II).

Die erfindungsgemäßen Verbindungen der Formel (I) und (II) können als Katalysatoren in chemischen Reaktionen eingesetzt werden, vorzugsweise werden sie als Katalysatoren in Metathesereaktionen eingesetzt. Sie können beispielsweise in Ringschluss-Metathesen eingesetzt werden. Ihre sehr hohen Aktivitäten werden an Hand zahlreicher Beispiele unterschiedlicher Substrate und auch im Vergleich zu bislang bekannten Systemen gezeigt. Die Ringschluss-Metathesen zeigen bereits nach wenigen Minuten quantitative Umsetzungen. Die erfindungsgemäßen Verbindungen der Formel (I) und (II) führen bei Einsatz als Ringschluss-Metathesekatalysatoren bereits bei tiefen Temperaturen (vorzugsweise zwischen -10°C und +20°C) nach wenigen Stunden praktisch zu quantitativen Umsätzen, wohingegen literaturbekannte Katalysatoren bei vergleichbaren Reaktions-bedingungen nur Umsätze ≤ 25% bei deutlich längeren Reaktionszeiten zeigen.

Werden die erfindungsgemäßen Verbindungen (I) und (II) in Kreuz-Metathesen als Katalysatoren eingesetzt, so zeigen sie unter vergleichbaren Reaktionsbedingungen ebenfalls deutlich höhere Aktivitäten als literaturbekannte Katalysatorsysteme. Gleiche Beobachtungen wurden in ringöffnenden Metathesepolymerisationen mit anschließender Kreuz-Metathese gemacht, was durch die Beispiele belegt wird.

### Beispiele

### Beispiel 1: Synthese von (R)-2,2'-Diisopropoxy-3-vinyl-1,1'-binaphthyl

### a) Synthese von (R)-2,2'-Diisopropoxy-1,1'-binaphthyl

2,0 g (6,98 mmol) (R)-1,1'-Binaphthyl-2,2'-diol wurden zu einer Suspension von 838 mg (20,95 mmol) Natriumhydrid (60 %ig) in 35 mL Dimethylformamid bei 0°C gegeben. Nach 1h Rühren bei Raumtemperatur, wurden 2,6 mL (27,94 mmol) Isopropylbromid zugegeben. Diese Lösung wurde weitere 86 h bei Raumtemperatur gerührt. Nach der Zugabe einer gesättigten Ammoniumchlorid-Lösung wurde die wässrige Phase mit Methyl-*tert*.butylether extrahiert. Die vereinigten organischen Phasen wurden mit gesättigter Natriumhydrogencarbonat-Lösung und gesättigter Natriumchlorid-Lösung gewaschen, anschließend über Na₂SO₄ getrocknet, filtriert und das Lösungsmittel im Vakuum entfernt. Der Rückstand wurde durch Säulenchromatographie an Kieselgel (Hexan/Methyl-*tert*.-butylether 40:1) gereinigt. (R)-2,2'-Diisopropoxy-1,1'-binaphthyl wurde in 80% Ausbeute erhalten.
**¹H-NMR** (500 MHz, CDCl₃) δ 1.01 (d, J = 6.1 Hz, 6 H), 109 (d, J = 6,1 Hz, 6 H), 4.44 (qq, J = 6.1, 6.1 Hz, 2 H), 7.19-7.21 (m, 4 H), 7.33-7.36 (m, 2 H), 7.44 (d, J = 9.0 Hz, 2 H), 7.88 (d, J = 8.2 Hz, 2 H), 7.94 (d ,9.0 Hz, 2 H).

### b) Synthese von (R)-2,2'-Diisopropoxy-1,1'-binaphthyl-3-carbaldehyd

Zu einer Lösung von 1 mL (7,45 mmol) Tetramethylethylendiamin 6 mL Tetrahydrofuran wurden 4,7 mL (7,45mmol) n-Butyllithium (1.6 M Lösung in Hexan) bei -78°C getropft. Nach 10 min wurden 920 mg (2,48 mmol) (R)-2,2'-Diisopropoxy-1,1'-binaphthyl in 6mL Tetrahydrofuran zugegeben. Diese Reaktionsmischung wurde 1 h bei 0° C nachgerührt. Nach dem erneuten Abkühlen auf -78°C wurde 1 mL (12.42 mmol) Dimethylformamid langsam zugegeben, danach auf Raumtemperatur erwärmt und 1 h bei dieser Temperatur nachgerührt. Nach der Zugabe einer gesättigten Ammoniumchlorid-Lösung wurde die wässrige Phase mit Methyl-*tert*.butylether extrahiert. Die vereinigten organischen Phasen wurden mit gesättigter Ammoniumchlorid-Lösung und gesättigter Natriumchlorid-Lösung gewaschen, anschließend über Na₂SO₄ getrocknet, filtriert und das Lösungsmittel im Vakuum entfernt. Der Rückstand wurde durch Säulenchromatographie an Kieselgel (Hexan/Methyl-*tert*.-butylether (80:1-40:1) gereinigt. (R)-2,2'-Diisopropoxy-1,1'-binaphthyl-3-carbaldehyd wurde in 28 % Ausbeute erhalten. Das eingesetzte Edukt wurde zu 49 % zurückgewonnen.
**¹H-NMR** (500 MHz, CDCl₃) δ 0.75 (d, J = 6,2 Hz, 3 H), 0.93 (d, J = 6.1 Hz, 3 H)), 1.01 (d, J = 6.0 Hz, 3 H), 1.14 (d, J = 6.0 Hz, 3 H), 3.89 (qq. J = 6.1, 6.2 Hz, 1 H), 4.59 (qq, J = 6.0, 6.0 Hz, 1 H), 7.17 (d, J = 8.5 Hz, 1 H), 7.23 (d, J = 8,5 Hz, 1 H), 7.25-7.28 (m 1 H), 7.30-7.35 (m, 2 H), 7.40-7.43 (m, 2 H), 7.89 (d, J = 8.1 Hz, 1 H), 7.98-8.01 (m, 2 H), 8.54 (s. 1 H), 10.67 (s, 1 H).

### c) Synthese von (R)-2,2'-Diisopropoxy-3-vinyl-1,1'-binaphthyl

Zu einer Suspension von 974 mg (2.73 mmol) Ph₃PCH₃Br in 9 mL Diethylether wurden 306 mg (2,73 mmol) Kalium-*tert*.-butylat bei 0°C gegeben. Die Suspension wurde 30 min bei Raumtemperatur nachgerührt. Zu dieser Mischung wurden 724 mg (1,82 mmol) (R)-2,2'-Diisopropoxy-1,1'-binaphthyl-3-carbaldehyd, welches in drei Portionen von jeweils 3 mL Diethylether gelöst wurde, bei 0°C zugegeben. Die resultierende Mischung wurde 10 min bei dieser Temperatur nachgerührt. Nach der Zugabe einer gesättigten Ammoniumchlorid-Lösung wurde die wässrige Phase mit Methyl-*tert*.butylether extrahiert. Die vereinigten organischen Phasen wurden mit gesättigter Ammoniumchlorid-Lösung und gesättigter Natriumchlorid-Lösung gewaschen, anschließend über Na₂SO₄ getrocknet, filtriert und das Lösungsmittel im Vakuum entfernt. Der Rückstand wurde durch Säulenchromatographie an Kieselgel (Hexan/Methyl-*tert*.-butylether (40:1) gereinigt. (R)-2,2'-Diisopropoxy-3-vinyl-1,1'-binaphthyl wurde in 96 % Ausbeute erhalten.
**¹H-NMR** (500 MHz, CDCl₃) δ 0.80 (d, J = 6.1 Hz, 3 H), 0.94 (d, J = 6.1 Hz, 3 H), 1.07 (d, J = 6.0 Hz, 3 H), 1.20 (d, J = 6.0 Hz, 3 H), 3.94 (qq, J = 6.1, 6.1 Hz, 1 H), 4.59 (qq, J = 6.0, 6.0 Hz, 1 H), 5.44 (dd, J = 1.0, 11.1 Hz, 1 H), 6.02 (dd, J = 1.0, 17.7 Hz, 1 H), 7.21-7.29 (m, 4 H), 7.33-7.42 (m, 3 H), 7.45 (d, J = 9.3 Hz, 1 H), 7.89 (d,J=8.1 Hz, 1 H), 7.92 (d, J = 8.2 Hz, 1 H), 7.99 (d, J = 9,0 Hz, 1 H), 8.19 (s. 1 H).

### Beispiel 2: Synthese einer Ruthenium-Verbindung mit (R)-2,2'-Diisopropoxy-3-vinyl-1,1'-binaphthyl als Ligand

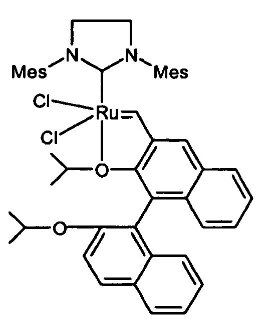

Zu einer Lösung von 83 mg (0,21 mmol) (R)-2,2'-Diisopropoxy-3-vinyl-1,1'-binaphthyl in 8 mL Dichlormethan wurden erst 11 mg (0,11 mmol) Kupfer(I)chlorid und dann 88 mg (0,10 mmol) Tricyclohexylphosphan[1,3-bis(2,4,6-trimethylphenyl)-4,5-dihydroimidazol-2-ylidene][benzylidine]ruthenium(IV)dichloride in 2 mL Dichlormethan gelöst zugegeben. Nach 1 h Rühren bei 40°C wurde die Reaktionslösung im Vakuum eingeengt. Der Rückstand wurde in sehr wenig Dichlormethan aufgenommen und über eine Pasteurpipette mit Glaswolle filtriert. Das Filtrat wurde wieder im Vakuum eingeengt und der Rückstand über Kieselgel (Hexan/Methyl*tert*. butylether 4:1) chromatographiert. Die gewünschte Verbindung wurde in 76 % Ausbeute isoliert.
**HR-MS** m/z C₄₈H₅₂O₂N₂Cl₂ ¹⁰² Ru (M⁺) 860,2443 ggf. 860,2451.

### Beispiel 3: Synthese von 2-Isopropoxy-3-vinyl-biphenyl

### a) 2-Isopropoxy-biphenyl

2 g (11,75 mmol) Biphenyl-2-ol wurden zu einer Suspension von 564 mg (14,1 mmol) Natriumhydrid (60 %ig) in 20 mL Dimethylformamid bei 0°C gegeben. Nach 1 h Rühren bei Raumtemperatur wurden 1,7 mL (17,63 mmol) Isopropylbromid zugegeben. Diese Lösung wurde 53 h bei 50°C gerührt. Nach der Zugabe einer gesättigten Ammoniumchlorid-Lösung wurde die wässrige Phase mit Methyl-*tert*.-butylether extrahiert. Die vereinigten organischen Phasen wurden mit einer 5 %igen Natriumhydroxid-Lösung und gesättigter Natriumchlorid-Lösung gewaschen, anschließend über Na₂SO₄ getrocknet, filtriert und das Lösungsmittel im Vakuum entfernt. Der Rückstand wurde durch Säulenchromatographie an Kieselgel (Hexan/Methyl-*tert*.-butylether 20:1) gereinigt. 2-Isopropoxy-3-vinyl-biphenyl wurde in 76 % Ausbeute erhalten.
**¹H-NMR** (500 MHz, CDCl₃) δ 1.26 (d, J = 6.0 Hz, 3 H), 1.26 (d, J = 6.0 Hz, 3 H), 4.45 (qq, J = 6.0, 6.0 Hz, 1 H), 7.00-7.05 (m, 2 H), 7.28-7.36 (m, 3 H), 7.41 (dd, J = 7.0, 7.3 Hz, 2 H), 7.58 (d, J = 7.8 Hz, 2 H).

### b) 2-Isopropoxy-biphenyl-3-carbaldehyd

### Herstellvariante A

Zu einer Lösung von 3,9 mL (26,28 mmol) Tetramethylethylendiamin in 19 mL Tetrahydrofuran wurden 16 mL (26,28 mmol) n-Butyllithium (1.6 M Lösung in Hexan) bei -78°C getropft. Nach 10 min wurden 1,86 mg (8,76 mmol) 2-Isopropoxybiphenyl in 10 mL Tetrahydrofuran zugegeben. Diese Reaktionsmischung wurde 1 h bei 0°C nachgerührt. Nach dem erneuten Abkühlen auf -78°C wurden 3,4 mL (43,81 mmol) Dimethylformamid langsam zugegeben, danach auf Raumtemperatur erwärmt und 1,5 h bei dieser Temperatur nachgerührt. Nach der Zugabe einer gesättigten Ammoniumchlorid-Lösung wurde die wässrige Phase mit Methyl-*tert*.butylether extrahiert. Die vereinigten organischen Phasen wurden mit gesättigter Ammoniumchlorid-Lösung und gesättigter Natriumchlorid-Lösung gewaschen, anschließend über Na₂SO₄ getrocknet, filtriert und das Lösungsmittel im Vakuum entfernt. Der Rückstand wurde durch Säulenchromatographie an Kieselgel (erst Hexan, dann Hexan/Methyl-*tert*.-butylether (40:1) gereinigt. 2-Isopropoxy-biphenyl-3-carbaldehyd wurde in 16 % Ausbeute erhalten. Das eingesetzte Edukt wurde zu 76 % zurückgewonnen.

### Herstellvariante B

141,7 mg (0,71 mmol) 2-Hydroxybiphenyl-3-carbaldehyd in 3 mL Dimethylformamid wurde zu 34 mg (0,86 mmol) einer Suspension von Natriumhydrid (60 %ig) in 4 mL Dimethylformamid bei 0°C getropft. Nach 30 min Rühren bei Raumtemperatur wurden 0,13 mL (1,43 mmol) Isopropylbromid zugegeben. Diese Lösung wurde 40 h bei 50°C gerührt. Nach der Zugabe von Wasser wurde die wässrige Phase mit Methyl-*tert*.-butylether extrahiert. Die vereinigten organischen Phasen wurden mit gesättigter Ammoniumchlorid-Lösung und gesättigter Natriumchlorid-Lösung gewaschen, anschließend über Na₂SO₄ getrocknet, filtriert und das Lösungsmittel im Vakuum entfernt. Der Rückstand wurde durch Säulenchromatographie an Kieselgel (Hexan/Ethylacetat (40:1) gereinigt. 2-Isopropoxy-biphenyl-3-carbaldehyd wurde in 82 % Ausbeute erhalten.
**¹H-NMR** (500 MHz, CDCl₃) δ 1.03 (d, J = 6.1 Hz, 6 H), 3.81 (qq, J = 6.1, 6.1 Hz, 1 H), 7.25 (t, J = 7.6 Hz, 1 H), 7.38 (t, J = 7.3 Hz, 1 H), 7.45 (dd, J = 7.3, 7.7 Hz, 2 H), 7.56-7.58 (m, 3 H), 7.85 (dd, J = 1.7, 7.6 Hz, 1 H), 10.52 (s. 1 H).

### c) 2-Isopropoxy-3-vinyl-biphenyl

Zu einer Suspension von 812 mg (2.27 mmol) Ph₃PCH₃Br in 6,5 mL Diethylether wurden 255 mg (2,27 mmol) Kalium-*tert*.-butylat bei 0°C gegeben. Die Suspension wurde 10 min bei Raumtemperatur nachgerührt. Zu dieser Mischung wurden 273 mg (1,14 mmol) 2-Isopropoxy-biphenyl-3-carbaldehyd, welches in 3 Portionen von jeweils 1,5 mL Diethylether gelöst wurde, bei 0°C zugegeben. Die resultierende Mischung wurde 5 min bei dieser Temperatur nachgerührt. Nach der Zugabe einer gesättigten Ammoniumchlorid-Lösung wurde die wässrige Phase mit Methyl-*tert*.butylether extrahiert. Die vereinigten organischen Phasen wurden mit gesättigter Ammoniumchlorid-Lösung und gesättigter Natriumchlorid-Lösung gewaschen, anschließend über Na₂SO₄ getrocknet, filtriert und das Lösungsmittel im Vakuum entfernt. Der Rückstand wurde durch Säulenchromatographie an Kieselgel (Hexan/- Methyl-*tert*.-butylether (80:1) gereinigt. 2-Isopropoxy-3-vinyl-biphenyl wurde in 89 % Ausbeute erhalten.
**¹H-NMR** (500 MHz, CDCl₃) δ 0.97 (d, J = 6.1 Hz, 6 H), 3.75 (qq, J = 6.1, 6.1 Hz, 1 H), 5.30 (dd, J = 0.9, 11.1 Hz, 1 H), 5.75 (dd, J = 0,9, 17.8 Hz, 1 H), 7.14 (dd, J = 7.4, 7.7 Hz, 1 H), 7.17 (dd, J = 11.1, 17.8 Hz, 1 H), 7.26 (dd, J = 1.4, 7.4 Hz, 1 H), 7.33 (t, J = 7.3 Hz, 1 H), 7.41 (t, J = 7.3 Hz, 2 H), 7.54 (dd, J = 1.4, 7.7 Hz, 1 H), 7.57 (d, J = 7,3 Hz, 2 H).

### Beispiel 4: Synthese einer Ruthenium-Verbindung mit 2-Isopropoxy-3-vinylbiphenyl als Ligand

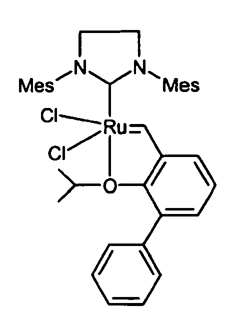

Zu einer Lösung von 94 mg (0,39 mmol) 2-Isopropoxy-3-vinyl-biphenyl in 16 mL Dichlormethan wurden erst 21 mg (0,22mmol) Kupfer(I)chlorid und dann 168 mg (0,20mmol) Tricyclohexylphosphan[ 1,3-bis(2,4,6-trimethylphenyl)-4,5-dihydroimidazol-2-ylidene][benzylidine]ruthenium(IV)dichloride in 4 mL Dichlormethan gelöst zugegeben. Nach 1 h Rühren bei 40°C wurde die Reaktionslösung im Vakuum eingeengt. Der Rückstand wurde in sehr wenig Dichlormethan aufgenommen und über eine Pasteurpipette mit Glaswolle filtriert. Das Filtrat wurde wieder im Vakuum eingeengt und der Rückstand über Kieselgel (Hexan/Methyl-*tert*.-butylether 4:1) chromatographiert. Die gewünschte Verbindung wurde in 71 % Ausbeute isoliert.
**HR-MS** m/z C₃₇H₄₂ON₂Cl₂ ¹⁰² Ru (M⁺) 702,1711 ggf. 702,1719

### Beispiel 5: RCM, wobei als Katalysator die Verbindung aus Beispiel 2 eingesetzt wurde

Eine 0.01 M Lösung des Substrates (s. Tabelle 1) in Dichlormethan wurde bei Raumtemperatur mit 1 mol% der Verbindung aus Beispiel 2 versetzt. Nach der angegebenen Reaktionszeit wurde das Metatheseprodukt durch Säulenchromatographie an Kieselgel abgetrennt und die Ausbeute bestimmt.

Im Vergleich dazu wurden der Umsatz bei Einsatz des Katalysators nach Formel (A) (Weskamp et al., Angew. Chem., Int. Ed. Engl. 38, 1999" 2416-2419 und Scholl et al., Org. Lett. 6, 1999, 953-956) 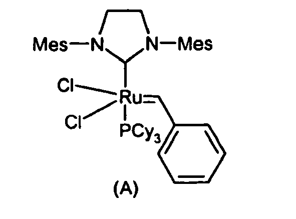 worin Mes für Mesitylen und PCy₃ für einen Tricyclohexylphosphan-Rest steht, nach ¹H-NMR bestimmt. Nach erfolgtem komplettem Umsatz wurde Metatheseprodukt durch Säulenchromatographie an Kieselgel abgetrennt und die Ausbeute bestimmt (Tabelle1)

**Tabelle 1**

| | | | | **Ausbeute (%)** | |
|---|---|---|---|---|---|
| **Beispiel** | **Substrat** | **Produkt** | **Zeit (min)** | **Verbindung aus Beispiel 2a)** | **(A)^{b)}** |
| 1 | 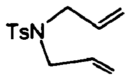 | 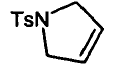 | 30 | quantitativ | 70 (1 h, quantitativ) |
| 2 | 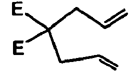 | 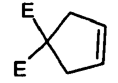 | 30 | 98 | 51 (1,5 h, quantitativ) |
| 3 | 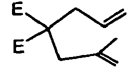 | 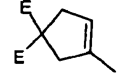 | 90 | quantitativ | 69 (4 h, quantitativ) |
| 4 | 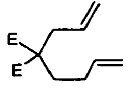 | 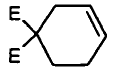 | 20 | quantitativ | 40 (1,5 h, quantitativ) |
| 5 | 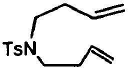 | 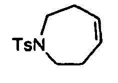 | 10 | quantitativ | 18 (1 h, quantitativ) |
| 6 | 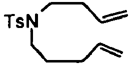 | 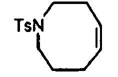 | 20 | quantitativ | 4 (4 h, 93 %) |

E = COOC₂H₅; 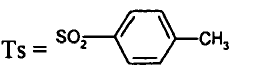
a) Ausbeute durch Isolierung mittels Chromatographie an Kieselgel
b) Umsatz nach ¹H-NMR. in Klammern: Komplette Umsetzung und Ausbeute durch Isolierung mittels Chromatographie an Kieselgel.

### Beispiel 6: RCM, wobei als Katalysator die Verbindungen aus Beispiel 2 und 4 eingesetzt wurden

Eine 0.01 M Lösung N,N-Bisallyltosylamid in Dichlormethan wurde bei 0° C mit 1 mol % der Verbindung aus Beispiel 4 bzw. 1 mol % der Verbindung aus Beispiel 2 versetzt. Die Umsetzung wurde mittels HPLC verfolgt (Edukt/Produkt-Verhältnis) Nach der angegebenen Reaktionszeit wurde das Metatheseprodukt durch Säulenchromatographie an Kieselgel abgetrennt und die Ausbeute bestimmt.

Analog dazu wurde der Umsatz und die Ausbeute bei Einsatz von 1 mol% des Katalysators nach Formel (A) bestimmt.

**Tabelle 2**

| **Zeit (min)** | **Umsatz (%)** | | |
|---|---|---|---|
| | Katalysator (A) | Verbindung aus Beispiel 2 | Verbindung aus Beispiel 4 |
| 10 | 6,6 | 12,2 | 53,4 |
| 20 | 7,0 | 16,2 | 67,7 |
| 30 | 8,7 | 18,7 | 76,1 |
| 45 | - | - | 85,1 |
| 60 | 9,9 | 35,1 | 89,6 |
| 90 | 10,5 | 42,6 | 95,6 |
| 120 | 11,2 | - | - |
| 180 | 14,4 | - | - |
| 240 | 15,5 | 62,3 | - |
| 300 | 21,6 | 73,6 | - |
| 360 | 22,0 | 67,8 | - |

Ausbeute mit Katalysator A nach 4 Tagen: 81 %
Ausbeute mit Verbindung aus Beispiel 2 nach 23 h: 89%
Ausbeute mit Verbindung aus Beispiel 4 nach 1,5 h: 97%

### Beispiel 7: CM, wobei als Katalysator die Verbindung aus Beispiel 2 eingesetzt wurde

O-Benzyl-4-penten-1-ol und zwei Äquivalente Acrylsäuremethylester wurden als 0,05 M Lösung in Dichlormethan vorgelegt und bei Raumtemperatur mit 1 mol% der Verbindung aus Beispiel 2 versetzt. Nach 20 min wurde das gewünschte Kreuzmetatheseprodukt mit 95 % Ausbeute isoliert. Die Umsetzung mit 2-Oxo-3-buten unter gleichen Reaktionsbedingen liefert ebenfalls nach 20 min das gewünschte Kreuzmetatheseprodukt in 98 % Ausbeute.

### Beispiel 8: CM, wobei als Katalysator die Verbindung aus Beispiel 4 eingesetzt wurde

**O**-Benzyl-4-penten-1-ol und zwei Äquivalente Acrylsäuremethylester werden als 0,05 M Lösung in CH₂Cl₂ vorgelegt und bei Raumtemperatur mit 1 mol% der Verbindung aus Beispiel 2 versetzt. Nach 15 min wurde das gewünschte Kreuzmetatheseprodukt in 93 % Ausbeute isoliert.

### Beispiel 9: ROMP, wobei als Katalysator die Verbindung aus Beispiel 4 eingesetzt wurde

Eine 0,15 molare Lösung 1,5-Cyclooctadien in CD₂Cl₂ wurde bei 20°C mit 0,3 mol% der Verbindung aus Beispiel 4 versetzt. Die Umsetzung wurde durch ¹H-NMR verfolgt (Edukt/Produkt-Verhältnis).

Analog hierzu wurde der Umsatz bei Einsatz des Katalysators nach Formel (A) bestimmt.

**Tabelle 3**

| **Zeit (min)** | **Umsatz (%)** | |
|---|---|---|
| | Katalysator (A) | Verbindung aus Beispiel 4 |
| 2 | 1,0 | 93,0 |
| 5 | - | 97,5 |
| 6 | 2,2 | - |
| 8 | - | 98,4 |
| 11 | 5,3 | - |
| 15 | 10,5 | - |
| 20 | 20,1 | - |
| 26 | 35,7 | - |
| 33 | 51,9 | - |
| 40 | 66,3 | - |
| 46 | 75,6 | - |
| 52 | 82,7 | - |
| 58 | 86,7 | - |
| 63 | 91,3 | - |
| 70 | 93,9 | - |
| 76 | 95,8 | - |
| 82 | 97,5 | - |
| 90 | 98,5 | - |

## Patentansprüche

1. Verbindungen der Formeln (I) und (II) 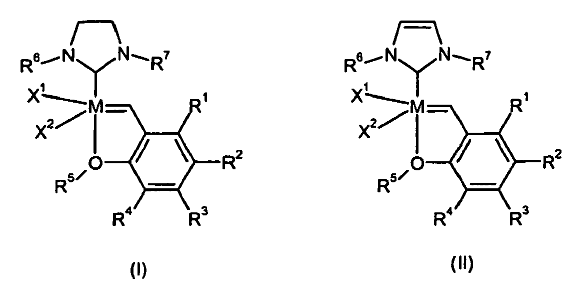 worin
M für Ruthenium oder Osmium steht,
X¹ und X² gleich oder verschieden sind und für einen anionischen Liganden aus der Reihe Halogenide, Pseudohalogenide, Hydroxide, Alkoxide, Carboxylate und Sulfonate stehen, wobei unter den Pseudohalogeniden Cyanid, Rhodanid, Cyanat, Isocyanat, Thiocyanat und Isothiocyanat verstanden wird,
R¹, R², R³ und R⁴ gleich oder verschieden sind und für Wasserstoff stehen, mit der Maßgabe, dass mindestens ein Rest R¹ bis R⁴ von Wasserstoff verschieden ist oder für cyclische, geradkettige oder verzweigte Alkylreste mit 1 bis 20 Kohlenstoffatomen oder für Arylreste mit 6 bis 20 Kohlenstoffatomen stehen, wobei in den genannten Alkyl- und Arylresten gegebenenfalls mindestens ein Wasserstoffatom durch eine funktionelle Gruppe ersetzt ist oder R¹ und/oder R⁴ für Halogen, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹, R² und R³ für Wasserstoff stehen und R⁴ für einen cyclischen, geradkettigen oder verzweigten Alkylrest mit 1 bis 20 Kohlenstoffatomen oder einen Arylrest mit 6 bis 20 Kohlenstoffatomen steht, wobei in den genannten Resten gegebenenfalls mindestens ein Wasserstoffatom durch eine Alkylgruppe oder eine funktionelle Gruppe ersetzt ist, oder für Halogen, C₁- C₄-Alkoxy, C₆-C₁₀-Aryloxy, Cyano, C₁-C₄-Alkoxycarbonyl, C₆-C₁₀- Aryloxycarbonyl oder für aliphatisches oder aromatisches C₁-C₁₀-Acyloxy steht, oder
R¹ und R⁴ gleich oder verschieden sind und für Wasserstoff oder einen Arylrest mit 6 bis 20 Kohlenstoffatomen stehen, wobei im Arylrest gegebenenfalls mindestens ein Wasserstoffatom durch eine Alkylgruppe oder eine funktionelle Gruppe ersetzt ist oder für Halogen, C₁-C₄-Alkoxy, C₆-C₁₀- Aryloxy, Cyano, C₁-C₄-Alkoxycarbonyl, C₆-C₁₀-Aryloxycarbonyl oder für aliphatisches oder aromatisches C₁-C₁₀-Acyloxy stehen und R² und R³ Teil eines cylischen aromatischen Systems mit 4 bis 14 Kohlenstoffatomen sind, wobei die Kohlenstoffatome in Formel (I) und (II) gemäß Anspruch 1 nicht mit eingerechnet werden und wobei gegebenenfalls mindestens ein Wasserstoffatom durch eine Alkylgruppe oder eine funktionelle Gruppe ersetzt ist,
R⁵ für einen geradkettigen oder verzweigten Alkylrest mit 1 bis 20 Kohlen- stoffatomen steht, und
R⁶ und R⁷ für gleiche Arylreste mit 6 bis 10 Kohlenstoffatomen steht, wobei mindestens ein Wasserstoffatom durch eine Alkylgruppe aus der Reihe Ethyl, n-Propyl, iso-Propyl, n-Butyl, iso-Butyl, sec.-Butyl und tert.-Butyl ersetzt ist.

2. Verfahren zur Herstellung von Verbindungen der Formel (I) und (II) gemäß Anspruch 1 durch Austausch des Phosphanliganden PZ₃ in Verbindungen der Formel (VI) 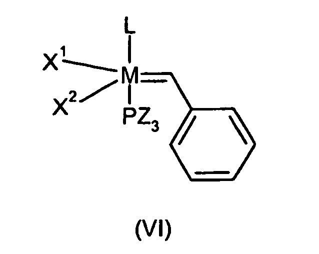 worin
L für 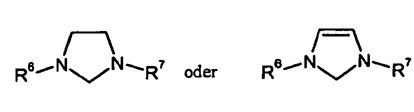 steht, und
R⁶ und R⁷ eine Bedeutung gemäß Anspruch 1 haben und
M, X¹ und X² eine Bedeutung gemäß Anspruch 1 haben, durch Liganden der Formel (VII) 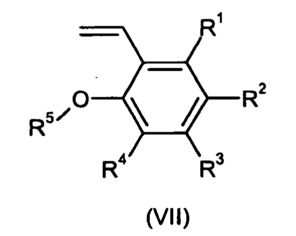
worin R¹ bis R⁵ eine Bedeutung gemäß Anspruch 1 haben.

3. Verfahren gemäß Anspruch 2, **dadurch gekennzeichnet, dass** die Umsetzung in Gegenwart von Verbindungen stattfindet, welche in der Lage sind, Phosphane abzufangen.

4. Verbindungen der Formel (VII) 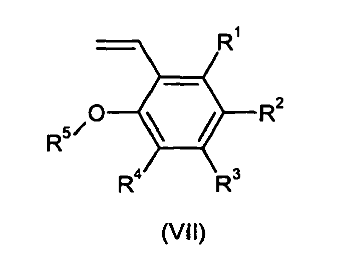 worin
R¹, R², R³ für Wasserstoff und R⁴ für Phenyl- oder Naphthylrest, wobei gegebenenfalls mindestens ein Wasserstoffatom durch eine Alkylgruppe oder eine funktionelle Gruppe ersetzt ist, vorzugsweise durch C₁-C₄-Alkyl oder C₁-C₄-Alkoxy oder für einen Rest aus der Reiehe Cl, Br, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy stehen, oder
R¹ für Wasserstoff und R⁴ für Wasserstoff stehen und R² und R³ Teil eines cyclischen aromatischen Systems mit 4 bis 8 Kohlenstoffatomen, wobei die Kohlenstoffatome in Formel (I) und (II) nicht mit eingerechnet werden und wobei gegebenenfalls mindestens ein Wasserstoffatom durch C₁-C₄-Alkyl oder C₁-C₄-Alkoxy ersetzt ist,
R⁵ für einen verzweigten Alkylrest aus der Reihe iso-Propyl, iso-Butyl, sec.- Butyl, tert.-Butyl, verzweigtes Pentyl, verzweigtes Hexyl steht.

5. Verbindungen der Formel (VII), **dadurch gekennzeichnet, dass** es sich um (R)-2,2'-Diisopropoxy-3-vinyl-1,1'-binaphthyl, 2-Isopropoxy-3-vinyl-biphenyl, 2-Isopropoxy-3-vinyl-naphthyl handelt.

6. Verfahren zur Herstellung von Verbindungen der Formel (VII) gemäß den Ansprüchen 4 und 5 durch Umsetzung von Verbindungen der Formel (XI) 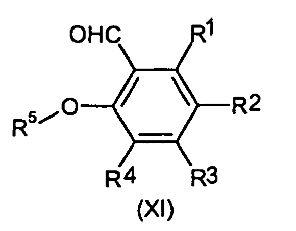 in einer Wittig-Reaktion.

7. Verwendung der Verbindungen der Formel (I) und (II) gemäß Anspruch 1 als Katalysatoren.

8. Verwendung der Verbindungen der Formel (I) und (II) gemäß Anspruch 1 als Katalysatoren in einer Metathesereaktion.

9. Verwendung der Verbindungen gemäß den Ansprüchen 4 und 5 als Liganden zur Herstellung von Übergangsmetallkomplexen.

## Claims

1. Compounds of the formulae (I) and (II) 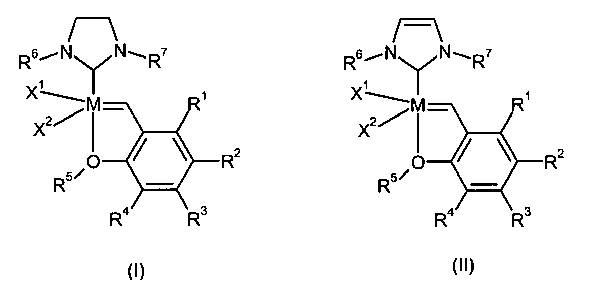 where
M is ruthenium or osmium,
X¹ and X² are the same or different and are each an anionic ligand from the group of halides, pseudohalides, hydroxides, alkoxides, carboxylates and sulphonates, the pseudohalides being cyanide, thiocyanate, cyanate, isocyanate and isothiocyanate,
R¹, R², R³ and R⁴ are the same or different and are each hydrogen, with the proviso that at least one radical R¹ to R⁴ is different to hydrogen, or are each cyclic, straight-chain or branched alkyl radicals having from 1 to 20 carbon atoms or aryl radicals having from 6 to 20 carbon atoms, where at least one hydrogen atom in the alkyl and aryl radicals mentioned is optionally replaced by a functional group, or R¹ and/or R⁴ is halogen, C₁-C₄-alkoxy, C₆-C₁₀-aryloxy, cyano, C₁-C₄-alkoxycarbonyl, C₆-C₁₀-aryloxy- carbonyl or aliphatic or aromatic C₁-C₁₀-acyloxy, or
R¹, R² and R³ are each hydrogen and R⁴ is a cyclic, straight-chain or branched alkyl radical having from 1 to 20 carbon atoms or an aryl radical having from 6 to 20 carbon atoms, where at least one hydrogen atom in the radicals mentioned is optionally replaced by an alkyl group or a functional group, or is halogen, C₁-C₄-alkoxy, C₆-C₁₀-aryloxy, cyano, C₁-C₄-alkoxycarbonyl, C₆-C₁₀-aryloxy- carbonyl or aliphatic or aromatic C₁-C₁₀-acyloxy, or
R¹ and R⁴ are the same or different and are each hydrogen or an aryl radical having from 6 to 20 carbon atoms, where at least one hydrogen atom in the aryl radical is optionally replaced by an alkyl group or a functional group, or are each halogen, C₁-C₄-alkoxy, C₆-C₁₀-aryloxy, cyano, C₁-C₄-alkoxycarbonyl, C₆-C₁₀- aryloxycarbonyl or aliphatic or aromatic C₁-C₁₀-acyloxy and R² and R³ are part of a cyclic aromatic system having from 4 to 14 carbon atoms, not including the carbon atoms in formulae (I) and (II) according to Claim 1, where at least one hydrogen atom is optionally replaced by an alkyl group or a functional group,
R⁵ is a straight-chain or branched alkyl radical having 1 to 20 carbon atoms, and
R⁶ and R⁷ are identical aryl radicals having from 6 to 10 carbon atoms, where at least one hydrogen atom is replaced by an alkyl group from the group of ethyl, n-propyl, isopropyl, n-butyl, isobutyl, sec-butyl and tert-butyl.

2. Process for preparing compounds of the formulae (I) and (II) according to Claim 1, by exchanging the phosphine ligand PZ₃ in compounds of the formula (VI) 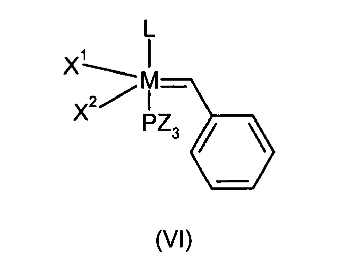 where
L is 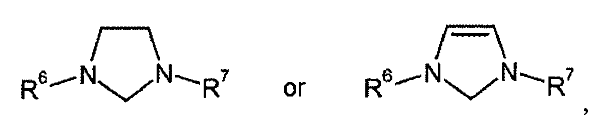 and
R⁶ and R⁷ are each as defined Claim 1 and
M, X¹ and X² are each as defined in Claim 1, by ligands of the formula (VII) 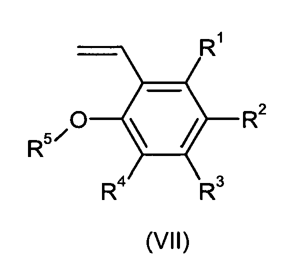
where R¹ to R⁵ are each as defined in Claim 1.

3. Process according to Claim 2, **characterized in that** the reaction takes place in the presence of compounds which are capable of scavenging phosphines.

4. Compounds of the formula (VII) 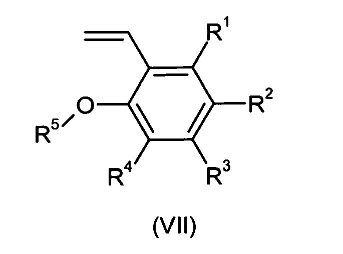 where
R¹, R², R³ are each hydrogen and R⁴ is a phenyl or naphthyl radical, where at least one hydrogen atom is optionally replaced by an alkyl group or a functional group, preferably by C₁-C₄-alkyl or C₁-C₄-alkoxy, or are each a radical from the group of C1, Br, methoxy, ethoxy, isopropoxy, tert-butoxy, phenoxy, cyano, methoxycarbonyl, ethoxycarbonyl, tert-butoxycarbonyl, acetoxy, propionyloxy and pivaloyloxy, or
R¹ is hydrogen and R⁴ is hydrogen and R² and R³ are part of a cyclic aromatic system having from 4 to 8 carbon atoms, not including the carbon atoms in formulae (I) and (II), where at least one hydrogen atom is optionally replaced by C₁-C₄-alkyl or C₁-C₄-alkoxy,
R⁵ is a branched alkyl radical from the group of isopropyl, isobutyl, sec-butyl, tert-butyl, branched pentyl, branched hexyl.

5. Compounds of the formula (VII), **characterized in that** they are (R)-2,2'-diisopropoxy-3-vinyl-1,1'-binaphthyl, 2-isopropoxy-3-vinylbiphenyl, 2-isopropoxy-3-vinylnaphthyl.

6. Process for preparing compounds of the formula (VII) according to Claims 4 and 5, by converting compounds of the formula (XI) 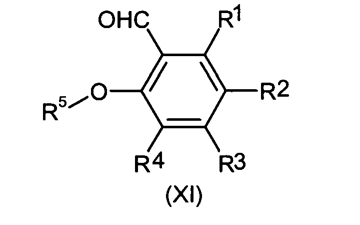 in a Wittig reaction.

7. Use of the compounds of the formula (I) and (II) according to Claim 1 as catalysts.

8. Use of the compounds of the formula (I) and (II) according to Claim 1 as catalysts in a metathesis reaction.

9. Use of the compounds according to Claims 4 and 5 as ligands for preparing transition metal complexes.

## Revendications

1. Composés des formules (I) et (II) 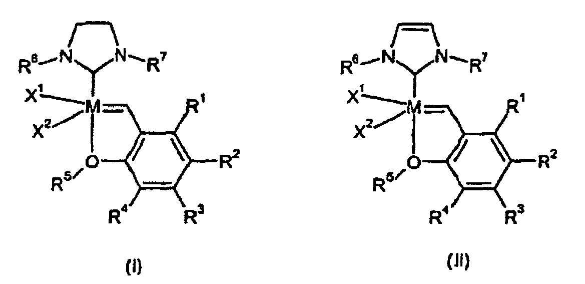 où
M représente ruthénium ou osmium,
X¹ et X² sont identiques ou différents et représentent un ligand anionique de la série halogénures, pseudohalogénures, hydroxydes, alcoxydes, carboxylates et sulfonates, où on entend par pseudohalogénures le cyanure, le sulfocyanure, le cyanate, l'isocyanate, le thiocyanate et l'isothiocyanate,
R¹, R², R³ et R⁴ sont identiques ou différents et représentent hydrogène, à condition qu'au moins un radical R¹ à R⁴ soit différent d'hydrogène ou représentent des radicaux alkyle cycliques, linéaires ou ramifiés, comprenant 1 à 20 atomes de carbone ou des radicaux aryle comprenant 6 à 20 atomes de carbone, où, dans les radicaux alkyle et aryle mentionnés, le cas échéant au moins un atome d'hydrogène est remplacé par un groupe fonctionnel ou R¹ et/ou R⁴ représente (nt) halogène, C₁-C₄- alcoxy, C₆-C₁₀-aryloxy, cyano, C₁-C₄- alcoxycarbonyle, C₆-C₁₀-aryloxycarbonyle ou C₁-C₁₀- acyloxy aliphatique ou aromatique, ou
R¹, R² et R³ représentent hydrogène et R⁴ représente un radical alkyle cyclique, linéaire ou ramifié, comprenant 1 à 20 atomes de carbone ou un radical aryle comprenant 6 à 20 atomes de carbone, où, dans les radicaux mentionnés, le cas échéant au moins un atome d'hydrogène est remplacé par un groupe alkyle ou un groupe fonctionnel, ou représente halogène, C₁-C₄-alcoxy, C₆-C₁₀-aryloxy, cyano, C₁-C₄-alcoxycarbonyle, C₆-C₁₀- aryloxycarbonyle ou C₁-C₁₀-acyloxy aliphatique ou aromatique, ou
R¹ et R⁴ sont identiques ou différents et représentent hydrogène ou un radical aryle comprenant 6 à 20 atomes de carbone, où, dans le radical aryle, le cas échéant au moins un atome d'hydrogène est remplacé par un groupe alkyle ou un groupe fonctionnel ou représentent halogène, C₁-C₄-alcoxy, C₆-C₁₀-aryloxy, cyano, C₁-C₄-alcoxycarbonyle, C₆-C₁₀- aryloxycarbonyle ou C₁-C₁₀-acyloxy aliphatique ou aromatique et R² et R³ font partie d'un système cyclique aromatique comprenant 4 à 14 atomes de carbone, où les atomes de carbone dans la formule (I) et (II) selon la revendication 1 ne sont pas inclus dans le calcul et où le cas échéant au moins un atome d'hydrogène est remplacé par un groupe alkyle ou un groupe fonctionnel,
R⁵ représente un radical alkyle linéaire ou ramifié comprenant 1 à 20 atomes de carbone, et
R⁶ et R⁷ représentent des radicaux aryle identiques comprenant 6 à 10 atomes de carbone, où au moins un atome d'hydrogène est remplacé par un groupe alkyle de la série éthyle, n-propyle, iso-propyle, n-butyle, iso-butyle, sec-butyle et tert-butyle.

2. Procédé pour la préparation de composés de formule (I) et (II) selon la revendication 1 par remplacement du ligand phosphane PZ₃ dans les composés de formule (VI) 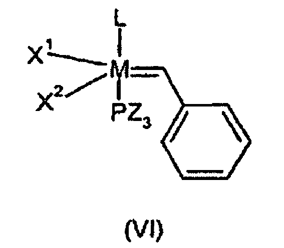 où
L représente 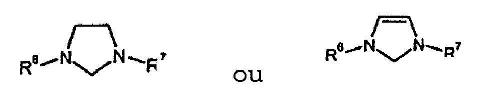 et
R⁶ et R⁷ présentent une signification selon la revendication 1 et
M, X¹ et X² présentent une signification selon la revendication 1, par des ligands de formule (VII) 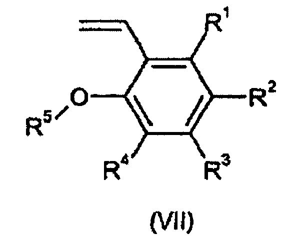
où R¹ à R⁵ présentent une signification selon la revendication 1.

3. Procédé selon la revendication 2, **caractérisé en ce que** la transformation est réalisée en présence de composés qui sont en mesure de capter les phosphanes.

4. Composés de formule (VII) 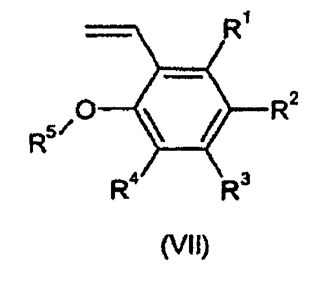 où
R¹, R², R³ représentent hydrogène et R⁴ représente un radical phényle ou naphtyle, où le cas échéant au moins un atome d'hydrogène est remplacé par un groupe alkyle ou un groupe fonctionnel, de préférence par C₁-C₄-alkyle ou C₁-C₄-alcoxy ou représentent un radical de la série Cl, Br, méthoxy, éthoxy, isopropoxy, tert-butoxy, phénoxy, cyano, méthoxycarbonyle, éthoxycarbonyle, tert- butoxycarbonyle, acétoxy, propionyloxy et pivaloyloxy, ou
R¹ représente hydrogène et R⁴ représente hydrogène et R² et R³ font partie d'un système cyclique aromatique comprenant 4 à 8 atomes de carbone, où les atomes de carbone dans la formule (I) et (II) ne sont pas inclus dans le calcul et où le cas échéant au moins un atome d'hydrogène est remplacé par C₁-C₄-alkyle ou C₁-C₄-alcoxy,
R⁵ représente un radical alkyle ramifié de la série iso-propyle, iso-butyle, sec-butyle, tert-butyle, pentyle ramifié, hexyle ramifié.

5. Composés de formule (VII), **caractérisés en ce qu'**il s'agit de (R)-2,2'-diisopropoxy-3-vinyl-1,1'-binaphtyle, de 2-isopropoxy-3-vinylbiphényle, de 2-isopropoxy-3-vinylnaphtyle.

6. Procédé pour la préparation de composés de formule (VII) selon les revendications 4 et 5 par transformation de composés de formule (XI) 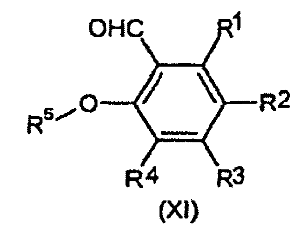 dans une réaction de Wittig.

7. Utilisation des composés de formule (I) et (II) selon la revendication 1 comme catalyseurs.

8. Utilisation des composés de formule (I) et (II) selon la revendication 1 comme catalyseurs dans une réaction de métathèse.

9. Utilisation des composés selon les revendications 4 et 5 comme ligands pour la préparation de complexes de métal de transition.
